# EUROPEAN PATENT SPECIFICATION

(11) **EP 3 689 205 B1**
(45) Date of publication and mention of the grant of the patent: **14.08.2024**
(21) Application number: 19189539.0
(22) Date of filing: 01.08.2019
(51) Int. Cl.: A47J 43/07, A47J 43/18

(54) **PLUNGER FOR KITCHEN APPLIANCE AND KITCHEN APPLIANCE**
KOLBEN FÜR KÜCHENGERÄT SOWIE KÜCHENGERÄT
PISTON POUR APPAREIL DE CUISINE ET APPAREIL DE CUISINE

(30) Priority: 02.02.2019 CN 201910107917
(43) Date of publication of application: 05.08.2020
(73) Proprietor: Versuni Holding B.V., 5656 AE Eindhoven (NL)
(72) Inventor: CUARESMA, Samuel, 5656 AE Eindhoven (NL); XU, XiaoMing, 5656 AE Eindhoven (NL)
(74) Representative: Vollering, Stefanus Franciscus Maria

(56) References cited:
- EP-A1- 3 427 622
- CN-U- 205 704 386
- CN-U- 207 127 954

## Description

### FIELD OF THE INVENTION

The present invention relates to a plunger for engaging with a feed tube of a kitchen appliance, the plunger comprising an elongate body terminating in a surface for engaging with a food item, said surface comprising an arrangement of spikes for engaging with the food item to prevent twisting of the food item relative to said surface.

The present invention further relates to a kitchen appliance including such a feed tube and plunger.

### BACKGROUND OF THE INVENTION

Many kitchen appliances comprise a feed tube through which a food item can be fed into the food processing chamber of the appliance. Such a feed tube for example may be located in the lid covering such a food processing chamber. The advantage of such a feed tube is that the user of the kitchen appliance does not have to remove the lid from the food processing chamber to gain access thereto. This for example allows the user to feed food items into the kitchen appliance whilst the appliance is in operation, which therefore improves the user experience with such a kitchen appliance. In order to facilitate the feeding of such food items through the feed tube of such a kitchen appliance, a plunger or pushrod may be provided with the appliance that fits into the feed tube. This for example may improve the safety of operation of the kitchen appliance whilst at the same time preventing food from being forced out of the food preparation chamber through the feed tube.

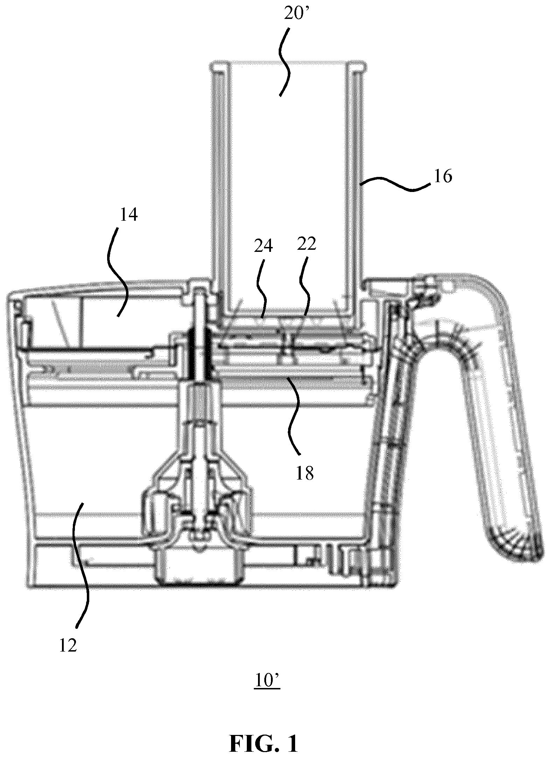

Some kitchen appliances that are equipped with such a feed tube may include a cutting blade arrangement at the bottom of the feed tube, such as a spiralizer blade arrangement. An example of such a kitchen appliance 10' is schematically depicted in FIG. 1, in which the food processing chamber 12 is covered by a lid 14 from which the feed tube 16 extends, with a cutting blade arrangement 18 at the bottom of the feed tube 16. An example of such an arrangement is disclosed in Chinese utility model application CN 205704386. When such a cutting blade arrangement 16 is present, care has to be taken that the plunger or push rod 20' does not contact the cutting blade arrangement to avoid damage to the plunger and/or cutting blade arrangement. To this end, the feed tube 16 may comprise a stop that ensures that a clearance remains between the plunger 20' and the cutting blade arrangement 18 when the plunger is fully inserted into the feed tube. However, this leaves a residual portion of the food item fed into the kitchen appliance in this clearance, which may be left behind in this clearance when the plunger 20' is pulled out of the feed tube 16 by the user of the kitchen appliance.

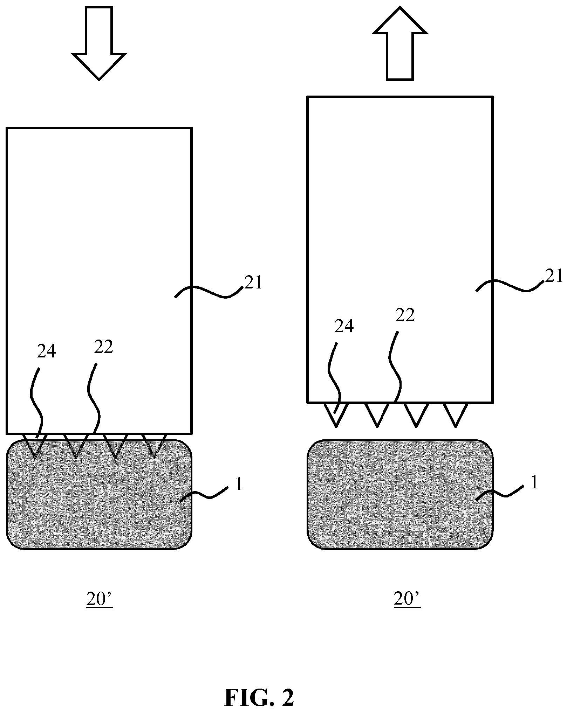

This is schematically depicted in FIG. 2, in which a portion 1 of a food item is secured on the surface 22 of the plunger 20' by an arrangement of spikes 24 when the plunger 20' is pushed into the feed tube 16 as symbolized by the downward pointing block arrow. However, when pulling the plunger 20' from the feed tube 16 as symbolized by the upward pointing block arrow, the portion 1 of the food item may slide off the arrangement of spikes 24 and remain in the clearance at the bottom of the feed tube 16. This is of course undesirable, as it requires the user to dismantle the kitchen appliance in order to remove this residual portion of the food item from the feed tube, e.g. for cleaning purposes or to allow another food item portion to be fed into the feed tube.

### SUMMARY OF THE INVENTION

The present invention seeks to provide a plunger for engaging with a feed tube of a kitchen appliance that does not suffer from the aforementioned problem.

The present invention further seeks to provide a kitchen appliance having such a plunger.

According to an aspect, there is provided a plunger for engaging with a feed tube of a kitchen appliance, the plunger comprising an elongate body terminating in a surface for engaging with a food item, said surface comprising an arrangement of spikes for engaging with the food item to prevent twisting of the food item relative to said surface; and at least one grab hook for engaging with the food item to prevent release of the food item from said surface. Due to the presence of the at least one grab hook of the surface of the plunger against which the food item is secured, the release of a residue of the food item from the plunger in the feed tube when pulling the plunger from the feed tube is avoided. Consequently, an improved user experience is provided due to the fact that the user does not have to remove such a residue from the feed tube, which can be cumbersome. Instead, the user can simply remove the food item residue from the plunger after removal of the plunger from the feed tube, which is significantly easier to achieve and does not require the disassembly of the kitchen appliance.

In an embodiment, each grab hook terminates in a tapered edge for cutting into the food item such that such a grab hook can more easily penetrate and secure into the food item.

In a preferred embodiment, the at least one grab hook comprises a closed loop extending from said surface and delimiting at least one hole within said closed loop. With such an arrangement, when the plunger is pushed into the food item, part of the food item will be forced into the at least one hole within such a closed loop such that when the plunger is pulled from the feed tube, the at least one grab hook holds the food item in place by virtue of the part of the food item within such a hole.

To further assist the forcing of such part of the food item in such a hole, each closed loop may be flanked by a pair of opposing further spikes for guiding a portion of the food item into the at least one hole within said closed loop. Such further spikes may have a multi-faceted surface, preferably with one of said surface facets facing the at least one hole in the closed loop of the grab hook such that a force pushing the portion of the food item onto the further spikes is redirected by the surface facets in the direction of the at least one hole in the further loop of the grab hook, thereby pushing the portion of the food item into the at least one hole of the closed loop of the grab hook in a particularly effective manner.

Each further spike may be shorter than any of the spikes of the arrangement of spikes. This for example may be beneficial where the further spikes are particularly sharp and/or made of metal, such that damage by the further spikes to a surface onto which the plunger is placed may be avoided, e.g. in case the spikes are less sharp than the further spikes.

In an embodiment, the arrangement of spikes is arranged in a radial pattern and the at least one grab hook is arranged within said radial pattern. This is a particularly effective arrangement as the radial arrangement of the spikes is particularly effective in preventing rotation of the food item relative to the surface of the plunger, whilst the centred arrangement of the at least one grab hook within the radial pattern of the spikes optimises the hold of the at least one grab hook on the food item.

Preferably, the at least one grab hook comprises a plurality of grab hooks, each extending radially away from the centre of said surface to ensure a firm grip of the grab hooks onto the food item. For example, the plurality of grab hooks may comprise a first pair of opposing grab hooks along on a first cross-section of the surface and a second pair of opposing grab hooks along on a second cross-section of the surface perpendicular to said first cross-section to achieve such a firm grip. In the context of the present application, it should be understood that where reference is made to the term cross-section, this refers to an imaginary line across the surface and through the centre of the plunger, such as a diagonal or the like.

In a particular embodiment, the elongate body is a plastic body, and each grab hook is a metal grab hook moulded into said plastic body. This yields a particularly strong arrangement, thereby reducing the risk of accidental damage to the one or more grab hooks, e.g. compared to an arrangement in which the grab hooks are an integral part of the plastic body, that is, a one-piece plastic body of which the grab hooks form part.

To this end, each grab hook may comprise a straight section extending from said surface and a curved section extending from said straight section embedded in said plastic body to provide a particularly strong anchoring of the grab hooks in the plastic body.

According to another aspect, there is provided a kitchen appliance comprising a food processing chamber; a feed tube for feeding food into said food processing chamber, said feed tube being arranged over a cutting blade arrangement; and the plunger of any of the herein described embodiments, in which the plunger is dimensioned to fit in said feed tube. Such a kitchen appliance benefits from the inclusion of the plunger according to embodiments of the present invention as a residual portion of the food item fed into the feed tube with the plunger does not have to be removed from the feed tube, but instead can be removed from the plunger after removal of the plunger from the feed tube, thereby improving the user experience of such a kitchen appliance.

The kitchen appliance may further comprise a stop arranged to prevent contact between the cutting blade arrangement and the plunger in order to prevent damage to the plunger and/or cutting blade arrangement in the event of such a contact.

In particular embodiments, the cutting blade arrangement may comprise a spiralizer disc to spiralize the food product prior to entry into the food processing chamber of the kitchen appliance.

The kitchen appliance may further comprise a lid for the food processing chamber, wherein the feed tube and the cutting blade arrangement form part of said lid.

### BRIEF DESCRIPTION OF THE DRAWINGS

Embodiments of the invention are described in more detail and by way of nonlimiting examples with reference to the accompanying drawings, wherein:
FIG. 1 schematically depicts a cross-sectional view of a prior art kitchen appliance;
FIG. 2 schematically depicts a cross-sectional view of the operating principle of a plunger of such a prior art kitchen appliance;
FIG. 3 schematically depicts a perspective view of a plunger for a kitchen appliance according to an embodiment of the present invention;
FIG. 4 schematically depicts an aspect of the plunger of FIG. 3 in more detail;
FIG. 5 schematically depicts a bottom view of a plunger for a kitchen appliance according to an embodiment of the present invention;
FIG. 6 schematically depicts a cross-sectional view of part of a plunger for a kitchen appliance according to an embodiment of the present invention;
FIG. 7 schematically depicts a cross-sectional view of the operating principle of part of a plunger for a kitchen appliance according to an embodiment of the present invention; and
FIG. 8 schematically depicts a perspective cut open view of a kitchen appliance according to an example embodiment of the present invention.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

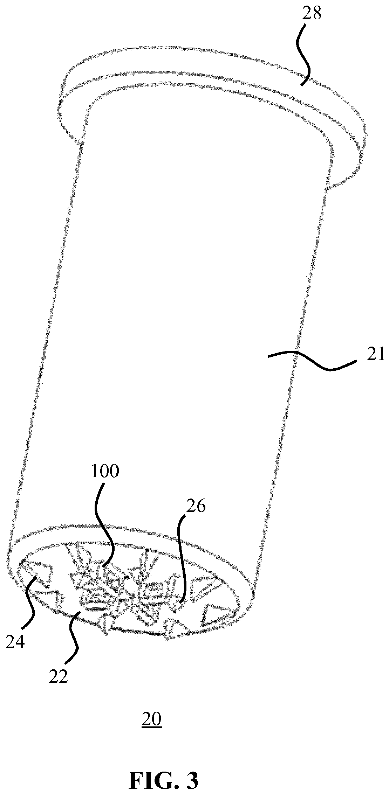

FIG. 3 schematically depicts a plunger 20 according to an example embodiment of the present invention in perspective view. The plunger 20 comprises an elongate body 21 terminating in a surface 22 for engaging with a food item such as a portion of fruit or vegetable for example. The elongate body 20 may be made of any suitable material. In a preferred embodiment, the elongate body 20 is made of plastic, which has the advantage that the plunger 20 can be made in a cost-effective manner, e.g. by a moulding process. The elongate body 20 at its end opposing the surface 22 may comprise a handle 28 to allow a user of the plunger 20 to easily grip the plunger 20. Such a handle 28 may have any suitable shape, such as the disc shape schematically depicted in FIG. 3 by way of nonlimiting example.

In other to secure the food item against the surface 22, the plunger 20 further comprises a plurality of spikes 24 extending from the surface 22, which are intended to penetrate the food item upon pressing the plunger 20 down onto the food item. Such spikes 24 typically ensure that the food item cannot easily rotate relative to the surface 22, which for example is desirable when the plunger 20 is used in conjunction with a kitchen appliance comprising a cutting blade arrangement such as a spiralizer disc arrangement, as in such an example scenario undesired rotation of the food item relative to the surface 22 of the plunger 20 may hamper the cutting or slicing of the food item by such a cutting blade arrangement. The spikes 24 may be made of any suitable material, e.g. plastic or metal. For example, the elongate body 21 may be a monolithic body including the spikes 24. Alternatively, the spikes 24 may be moulded into the elongate body 21 of the plunger 20. The spikes 24 may have any suitable shape, such as a conical shape or a multi-faceted shape such as a pyramidal shape. A multi-faceted shape may provide a more effective securing of the food item onto the surface 22 of the plunger 20. Preferably, the arrangement of spikes 24 comprises a radial distribution of the spikes 24 proximal to the outer perimeter of the surface 22 in which individual spikes 24 are spaced apart from each other in this radial pattern in order to prevent rotation of the food item relative to the surface 22 in a particularly effective manner. This ensures that large food items can be secured against the surface 22 of the plunger 20.

The surface 22 further comprises at least one grab hook 100, and preferably comprises a plurality of such grab hooks 100 shaped such that upon pushing the food item onto the plunger 20, a portion of the food item is secured or grabbed by the at least one grab hook 100 such that upon a pulling force being exerted onto the plunger 20, e.g. when pulling the plunger 20 from a feed tube 16 of a kitchen appliance, the one or more grab hooks 100 prevent the easy release of the remainder of the food item from the surface 22 of the plunger 20, e.g. by sliding off the spikes 24 as explained above with the aid of FIG. 2. In order to optimize the grip of the at least one grab hook 100 on the food item, the at least one grab hook preferably is located proximal to the centre of the surface 22, e.g. within the radial arrangement of spikes 24.

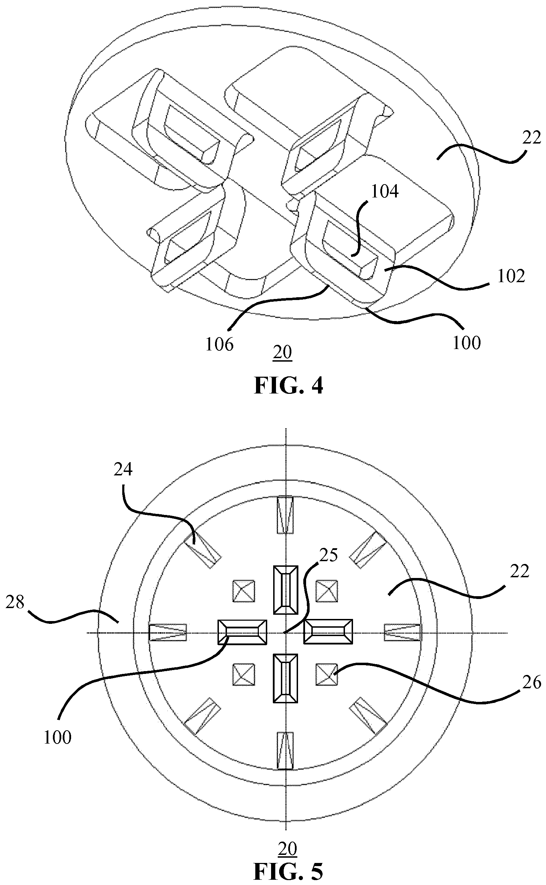

FIG.4 schematically depicts an example embodiment of such a centered arrangement of grab hooks 100 on a central section of the surface 22 in detail, whilst FIG. 5 schematically depicts a face on view of the entire surface 22 including this arrangement of grab hooks 100. In this arrangement, the grab hooks 100 have a body defining a closed loop 102 extending from the surface 22, with such a closed loop 102 delimiting at least one hole 104 extending through the grab hook 100. Of course, arrangements in which the hole 104 is partitioned into multiple holes are equally feasible, although it is noted that when the holes 104 become particularly small, insertion of a portion of the food item into such holes may become more difficult, and the grab hooks 100 may become more difficult to clean. The closed loop 102 of each grab hook 100 may terminate in a tapered edge 106, e.g. a pointed cutting edge, arranged to cut into the food item upon the plunger 20 being pushed into the food item. The grab hooks 100 may be centred in any suitable manner relative to the centre 25 of the surface 22. For example, a first pair of grab hooks 100 may be arranged along a first cross-sectional virtual line across the surface 22 and a second pair of grab hooks 100 may be arranged along a second cross-sectional virtual line across the surface 22 perpendicular to the first cross-sectional virtual line. Of course, other arrangements of such grab hooks 100 on the surface 22 are equally feasible.

In order to assist with the direction of a portion of the food item onto the at least one grab hook 100, e.g. into the holes 104 of such grab hooks, the surface 22 may further carry an arrangement of further spikes 26. The further spikes 26, which may be shorter than the spikes 24, are typically positioned such that each grab hook 100 is flanked by a pair of such further spikes 26. For example, such a pair of further spikes 26 may be arranged on opposite ends of the hole 104 through such a grab hook 100 such that upon forcing the plunger 20 into a food item, a portion of the food item interacting with the further spikes 26 is redirected by the further spikes onto the grab hook 100, e.g. into the hole 104 of the grab hook 100. In this manner, the grab hook 100 grabs a portion of the food item, such that when a pulling force is exerted by a user onto the plunger 20, this force is transferred by each grab hook 100 onto the portion of the food item interacting with the grab hook 100, thereby pulling the food item from the feed tube 16 of a food processor and retaining the food item against the surface 22 of the plunger 20. In a preferred embodiment, the further spikes 26 have angled multi-faceted surfaces to redirect a portion of the food item onto a grab hook 100 in a particularly efficient manner. For example, each further spikes 26 may have a pyramidal shape in which one of the angled surface facets of the further spike 26 is facing the hole 104 within the closed loop 102 of a grab hook 100 such that upon interaction with a portion of the food item, this surface facet redirects this portion of the food item directly into the hole 104. The further spikes 26 may have any suitable number of surface facets, e.g. three or four surface facets in case of pyramidally shaped further spikes 26.

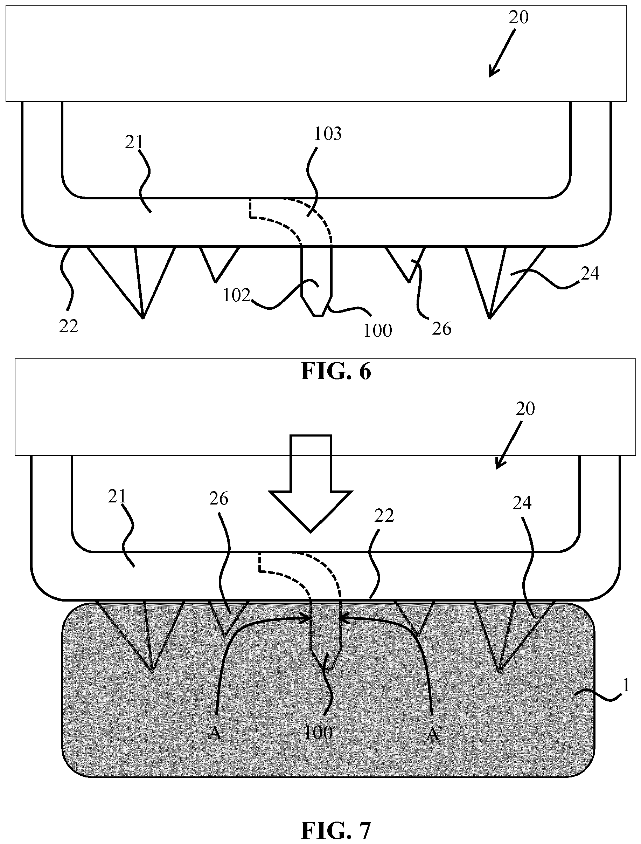

The one or more grab hooks 100 may be made of any suitable material. For example, the grab hooks 100 may be formed as plastic hooks that are an integral part of the elongate body 22 of the plunger 20. Preferably, the grab hooks 100 are metal hooks that are molded into the plastic elongate body 21 of the plunger 20, as schematically depicted in FIG. 6, in order to increase the strength of the grab hooks 100. In this embodiment, each grab hook 100 may have a straight section in a cross-sectional view, e.g. the closed loop 102, extending from the surface 22 of the plunger 20 and a curved section 103 in the same cross-sectional view that extends from the straight section 102 of the grab hook 100 and is embedded, i.e. moulded, into the plastic elongate body 21 of the plunger 20.

The operating principle of a preferred embodiment of the plunger 20 is schematically depicted in the cross-sectional view of the bottom part of the plunger 20 in FIG. 7. In this preferred embodiment, the plunger 20 comprises a centred arrangement of grab hooks 100 each comprising a closed loop 102 extending from the surface 22 of the plunger 20 and delimiting a hole 104 as shown in FIG. 4 for instance. Each hole 104 is flanked by a pair of multi-faceted further spikes 26 as previously explained, with one of said surface facets facing the hole 104. This arrangement of grab hooks 100 and further spikes 26 lies within a radial distribution of spikes 24 proximal to the outer perimeter of the surface 22 such that upon pressing the plunger 20 into the food item 1 as indicated by the downward pointing block arrow, the spikes 24 secure the food item 1 against the surface 22 such that the food item 1 cannot easily rotate relative to the surface 22, whereas the arrangement of further spikes 26 redirect the downward force as indicated by arrows A and A' causing a portion of the food item 1 to be lodged into the opening or hole 104 through the grab hook 100. Consequently, when exerting an upward force onto the plunger 20, e.g. when pulling the plunger 20 from a feed tube 16 of a kitchen appliance, the remainder of the food item 1 is lifted from this feed tube 16 owing to the portion of the food item 1 being lodged into the one or more grab hooks 100 preventing easy release of the remainder of the food item 1 from the plunger 20.

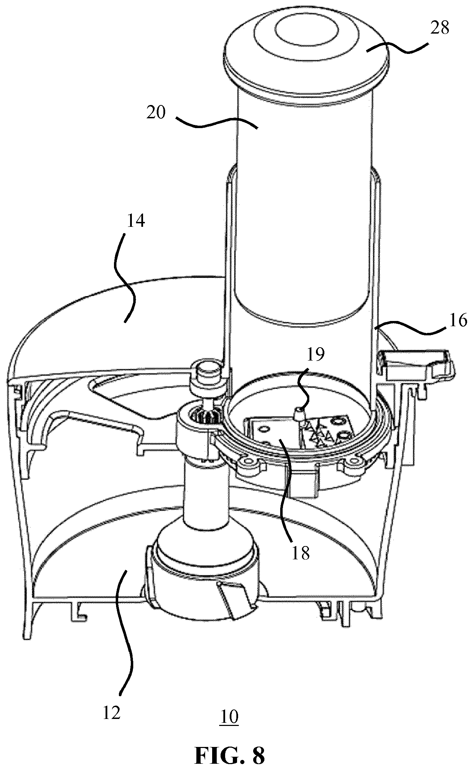

FIG. 8 schematically depicts a cut away perspective view of a kitchen appliance 10 according to an example embodiment of the present invention. The kitchen appliance 10 comprises a food processing chamber 12 for processing food introduced into the food processing chamber 12. Such food processing is not limited to a particular type of food processing and for example may include one or more of food preparation such as food cooking, steaming, frying, poaching or the like, food dicing, cutting, slicing, grinding or the like, food mixing, stirring or the like, and so on.

The kitchen appliance 10 further comprises a feed tube 16 for introducing food items into the food processing chamber 12. For example, the feed tube 16 may form part of a lid 14 for covering the food processing chamber 12, e.g. may extend from such a lid 14. However, it is noted for the avoidance of doubt that such a feed tube may be arranged over the food preparation chamber 12 in any suitable manner. The kitchen appliance 10 further comprises the plunger 20 according to any of the previously described embodiments of the present invention. As will be readily understood by the skilled person, the plunger 20 is typically dimensioned such that it fits into the feed tube 16. The plunger 20 and the feed tube 16 may have any suitable matching cross-sectional shape, such as a circular shape, oblong shape and so on.

At the bottom of the feed tube 16, e.g. within the lid 14, a cutting blade arrangement 18 may be arranged to cut the food item forced into the feed tube 16 with the plunger or push rod 20 prior to introduction of this food item into the food processing chamber 12. For example, such a cutting blade arrangement 18 may comprise a spiralizer disc to spiralize (e.g. cut into curled ribbons) the food item introduced into the feed tube 16. In order to prevent potentially damaging contact between the end surface 22 of the plunger 20 and the cutting blade arrangement 18, a stop 19 may be present within the feed tube 16. Such a stop 19 may be arranged in any suitable manner, e.g. extend from a surface comprising the cutting blade arrangement 18 or may be shaped as a protruding ring or portions thereof on the inner side wall of the feed tube 16. Other suitable arrangements of such a stop 19 will be immediately apparent to the skilled person. Due to the presence of the one or more grab hooks 100 on the surface 22 of the plunger 20, the residual portion of the food item feeling the clearance between the plunger 20 and the cutting blade arrangement 18 as defined by the position and/or dimensions of the stop 19 can be removed from the feed tube 16 with the plunger 20 by pulling the plunger 20 from the feed tube 16, thereby obviating the need for a user of the kitchen appliance 10 to dismantle the appliance, e.g. by removal of the lid 14, in order to remove such a residual portion of the food item from the bottom of the feed tube 16. Consequently, the kitchen appliance 10 according to embodiments of the present invention is more user-friendly compared to for example the kitchen appliance 10' depicted in FIG. 1, as it does not require removal of such a residual portion of a food item from the feed tube 16.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A plunger (20) for engaging with a feed tube (16) of a kitchen appliance (10), the plunger comprising an elongate body (21) terminating in a surface (22) for engaging with a food item (1), said surface comprising:
an arrangement of spikes (24) for engaging with the food item to prevent twisting of the food item relative to said surface,
**characterized in that** said surface (22) comprises at least one grab hook (100) for engaging with the food item to prevent release of the food item from said surface.

2. The plunger (20) of claim 1, wherein each grab hook (100) terminates in a tapered edge (106) for cutting into the food item (1).

3. The plunger (20) of claim 1 or 2, wherein the at least one grab hook (100) comprises a closed loop (102) extending from said surface (22) and delimiting at least one hole (104) within said closed loop.

4. The plunger (20) of claim 3, wherein each closed loop (102) is flanked by a pair of opposing further spikes (26) for guiding a portion of the food item (1) into the at least one hole within said closed loop.

5. The plunger (20) of claim 4, wherein each further spike (26) has a multi-faceted surface.

6. The plunger (20) of claim 4 or 5, wherein each further spike (26) is shorter than any of the spikes (24) of the arrangement of spikes.

7. The plunger (20) of any of claims 1-6, wherein the arrangement of spikes (24) is arranged in a radial pattern and the at least one grab hook (100) is arranged within said radial pattern.

8. The plunger (20) of any of claims 1-7, wherein the at least one grab hook (100) comprises a plurality of grab hooks, each extending radially away from the centre (25) of said surface (22).

9. The plunger (20) of claim 8, wherein the plurality of grab hooks (100) comprises a first pair of opposing grab hooks along on a first cross-section of the surface (22) and a second pair of opposing grab hooks along on a second cross-section of the surface perpendicular to said first cross-section.

10. The plunger (20) of any of claims 1-9, wherein the elongate body (21) is a plastic body, and each grab hook (100) is a metal grab hook moulded into said plastic body.

11. The plunger (20) of claim 10, wherein each grab hook (100) comprises a straight section (102) extending from said surface (22) and a curved section (103) extending from said straight section embedded in said plastic body (21).

12. A kitchen appliance (10) comprising:
a food processing chamber (12);
a feed tube (16) for feeding food (1) into said food processing chamber, said
feed tube being arranged over a cutting blade arrangement (18); and
the plunger (20) of any of claims 1-11 dimensioned to fit in said feed tube.

13. The kitchen appliance (10) of claim 12, further comprising a stop (19) arranged to prevent contact between the cutting blade arrangement (18) and the plunger (20).

14. The kitchen appliance (10) of claim 12 or 13, wherein the cutting blade arrangement (18) comprises a spiralizer disc.

15. The kitchen appliance (10) of any of claims 12-14, further comprising a lid (14) for the food processing chamber (12), wherein the feed tube (16) and the cutting blade arrangement (18) form part of said lid.

## Patentansprüche

1. Kolben (20) zum Eingreifen in einen Einfüllstutzen (16) eines Küchengeräts (10), wobei der Kolben einen länglichen Körper (21) umfasst, der in einer Oberfläche (22) zum Eingreifen in ein Nahrungsmittel (1) endet, wobei die Oberfläche umfasst:
eine Anordnung von Stacheln (24) zum Eingreifen in das Nahrungsmittel, um ein Verdrehen des Nahrungsmittels in Bezug zur Oberfläche zu verhindern,
**dadurch gekennzeichnet, dass** die Oberfläche (22) zumindest einen Greifhaken (100) zum Eingreifen in das Nahrungsmittel umfasst, um ein Lösen des Nahrungsmittels von der Oberfläche zu verhindern.

2. Kolben (20) nach Anspruch 1, wobei jeder Greifhaken (100) in einer verjüngten Kante (106) zum Einschneiden des Nahrungsmittels (1) endet.

3. Kolben (20) nach Anspruch 1 oder 2, wobei der zumindest eine Greifhaken (100) eine geschlossene Schleife (102) umfasst, die sich von der Oberfläche (22) erstreckt und zumindest ein Loch (104) innerhalb der geschlossenen Schleife begrenzt.

4. Kolben (20) nach Anspruch 3, wobei jede geschlossene Schleife (102) von einem Paar gegenüberliegender weiterer Stacheln (26) flankiert wird, um einen Teil des Nahrungsmittels (1) in das zumindest eine Loch innerhalb der geschlossenen Schleife zu leiten.

5. Kolben (20) nach Anspruch 4, wobei jeder weitere Stachel (26) eine mehrfach facettierte Oberfläche aufweist.

6. Kolben (20) nach Anspruch 4 oder 5, wobei jeder weitere Stachel (26) kürzer ist als ein beliebiger der Stacheln (24) der Anordnung von Stacheln.

7. Kolben (20) nach einem der Ansprüche 1-6, wobei die Anordnung von Stacheln (24) in einem radialen Muster angeordnet ist und der zumindest eine Greifhaken (100) innerhalb des radialen Musters angeordnet ist.

8. Kolben (20) nach einem der Ansprüche 1-7, wobei der zumindest eine Greifhaken (100) eine Vielzahl von Greifhaken umfasst, die sich jeweils radial von der Mitte (25) der Oberfläche (22) weg erstrecken.

9. Kolben (20) nach Anspruch 8, wobei die Vielzahl von Greifhaken (100) ein erstes Paar gegenüberliegender Greifhaken entlang eines ersten Querschnitts der Oberfläche (22) und ein zweites Paar gegenüberliegender Greifhaken entlang eines zweiten Querschnitts der Oberfläche senkrecht zu dem ersten Querschnitt umfasst.

10. Kolben (20) nach einem der Ansprüche 1-9, wobei der längliche Körper (21) ein Kunststoffkörper ist und jeder Greifhaken (100) ein in den Kunststoffkörper eingeformter Metallgreifhaken ist.

11. Kolben (20) nach Anspruch 10, wobei jeder Greifhaken (100) einen geraden Abschnitt (102), der sich von der Oberfläche (22) erstreckt, und einen gekrümmten Abschnitt (103) umfasst, der sich von dem geraden Abschnitt erstreckt, der in den Kunststoffkörper (21) eingebettet ist.

12. Küchengerät (10), umfassend:
eine Nahrungsmittelverarbeitungskammer (12);
einen Einfüllstutzen (16) zum Einfüllen von Nahrungsmitteln (1) in die Nahrungsmittelverarbeitungskammer, wobei der Einfüllstutzen über einer Schneidklingenanordnung (18) angeordnet ist; und
wobei der Kolben (20) nach einem der Ansprüche 1-11 bemessen ist, um in den Einfüllstutzen zu passen.

13. Küchengerät (10) nach Anspruch 12, weiter einen Anschlag (19) umfassend, der angeordnet ist, um Kontakt zwischen der Schneidklingenanordnung (18) und dem Kolben (20) zu verhindern.

14. Küchengerät (10) nach Anspruch 12 oder 13, wobei die Schneidklingenanordnung (18) eine Spiralschneidescheibe umfasst.

15. Küchengerät (10) nach einem der Ansprüche 12-14, weiter einen Deckel (14) für die Nahrungsmittelverarbeitungskammer (12) umfassend, wobei der Einfüllstutzen (16) und die Schneidklingenanordnung (18) einen Teil des Deckels bilden.

## Revendications

1. Piston (20) pour venir en prise avec un tube d'alimentation (16) d'un appareil de cuisine (10), le piston comprenant un corps allongé (21) se terminant par une surface (22) pour venir en prise avec un aliment (1), ladite surface comprenant :
un agencement de pointes (24) pour venir en prise avec l'aliment pour empêcher une torsion de l'aliment par rapport à ladite surface,
**caractérisé en ce que** ladite surface (22) comprend au moins un crochet de préhension (100) pour venir en prise avec l'aliment pour empêcher une libération de l'aliment à partir de ladite surface.

2. Piston (20) selon la revendication 1, dans lequel chaque crochet de préhension (100) se termine par un bord effilé (106) pour couper dans l'aliment (1).

3. Piston (20) selon la revendication 1 ou 2, dans lequel le au moins un crochet de préhension (100) comprend une boucle fermée (102) s'étendant à partir de ladite surface (22) et délimitant au moins un trou (104) à l'intérieur de ladite boucle fermée.

4. Piston (20) selon la revendication 3, dans lequel chaque boucle fermée (102) est flanquée d'une paire de pointes supplémentaires opposées (26) pour guider une partie de l'aliment (1) dans le au moins un trou à l'intérieur de ladite boucle fermée.

5. Piston (20) selon la revendication 4, dans lequel chaque pointe supplémentaire (26) présente une surface à multiples facettes.

6. Piston (20) selon la revendication 4 ou 5, dans lequel chaque pointe supplémentaire (26) est plus courte qu'une quelconque des pointes (24) de l'agencement de pointes.

7. Piston (20) selon l'une quelconque des revendications 1-6, dans lequel l'agencement de pointes (24) est agencé selon un motif radial et le au moins un crochet de préhension (100) est agencé à l'intérieur dudit motif radial.

8. Piston (20) selon l'une quelconque des revendications 1-7, dans lequel le au moins un crochet de préhension (100) comprend une pluralité de crochets de préhension, chacun s'étendant radialement à l'opposé du centre (25) de ladite surface (22).

9. Piston (20) selon la revendication 8, dans lequel la pluralité de crochets de préhension (100) comprend une première paire de crochets de préhension opposés le long d'une première section transversale de la surface (22) et une seconde paire de crochets de préhension opposés le long d'une seconde section transversale de la surface perpendiculaire à ladite première section transversale.

10. Piston (20) selon l'une quelconque des revendications 1-9, dans lequel le corps allongé (21) est un corps en plastique et chaque crochet de préhension (100) est un crochet de préhension en métal moulé dans ledit corps en plastique.

11. Piston (20) selon la revendication 10, dans lequel chaque crochet de préhension (100) comprend une section droite (102) s'étendant depuis ladite surface (22) et une section incurvée (103) s'étendant depuis ladite section droite intégrée dans ledit corps en plastique (21).

12. Appareil de cuisine (10), comprenant :
une chambre de traitement d'aliment(12) ;
un tube d'alimentation (16) pour introduire un aliment (1) dans ladite chambre de traitement d'aliment, ledit tube d'alimentation étant agencé sur un agencement de lame de coupe (18) ; et
le piston (20) selon l'une quelconque des revendications 1-11, dimensionné pour entrer dans ledit tube d'alimentation.

13. Appareil de cuisine (10) selon la revendication 12, comprenant en outre une butée (19) agencée pour empêcher un contact entre l'agencement de lame de coupe(18) et le piston (20).

14. Appareil de cuisine (10) selon la revendication 12 ou 13, dans lequel l'agencement de lame de coupe (18) comprend un disque de spiraliseur.

15. Appareil de cuisine (10) selon l'une quelconque des revendications 12-14, comprenant en outre un couvercle (14) pour la chambre de traitement d'aliment (12), dans lequel le tube d'alimentation (16) et l'agencement de lame de coupe (18) font partie dudit couvercle.
